# EUROPEAN PATENT APPLICATION

(11) **EP 1 703 450 A1**
(43) Date of publication of application: **20.09.2006**
(21) Application number: 04807356.3
(22) Date of filing: 20.12.2004
(51) Int. Cl.: G06Q 10/00

(54) **MILEAGE SERVICE SYSTEM USING POSITIONAL INFORMATION OF MOBILE COMMUNICATION TERMINALS AND METHOD THEREFOR**

(30) Priority: 06.01.2004 JP 2004001187
(71) Applicant: NEC CORPORATION, Minato-ku, Tokyo 108-8001 (JP)
(72) Inventor: KOMATSU, Kenichi, c/o NEC Corporation, Tokyo 1088001 (JP)
(74) Representative: Vossius & Partner
(86) International application number: PCT/JP2004/018999
(87) International publication number: WO 2005/066862

(57) **Abstract**

A mileage service system using location information of a mobile communication terminal and a method thereof, capable of providing a user with a mileage service according to a travel distance are provided, in order for an information provider of the service industry or the like to differentiate a service to the user from a distance. A server 300 obtains location information, which a mobile communication terminal 100 detects by a detecting unit, by an obtaining unit, calculates a distance between a fixed property and a mobile communication terminal based on location information of the fixed property and location information of the mobile communication terminal, each stored in a database 330, by a mileage processing unit 320, and converts the distance to mileage points.

## Description

### Technical Field

The present invention relates to a mileage service system, using location information of a mobile communication terminal, which is capable of providing a mileage service according to a distance from a departure point of a user to a hotel or a leisure facility, and a method thereof.

### Background Art

Conventionally, in some industries using moving vehicles, such as the air industry and the transport service industry, a mileage service in which points are added based on a travel distance of a user is known. However, it was difficult to apply the mileage service to the bus industry and the taxi industry, in which travel distance is relatively short.

Therefore, a system composing a mobile terminal with a location search function and a server provided with means for a point calculation based on the travel distance has been proposed (for example, Japanese Patent Application Laid-Open No. 2001-306678: Patent Document 1). That system provides a mileage service not based on mileage points set for routes as can be seen in the air industry but based on actual measurement using a mobile terminal so that the mileage service is applied not only to the air industry but also to all the transport industries.

Further, a system comprising a mobile communication device with a GPS function and a server with a function to calculate and record distance information has been proposed (for example, Japanese Patent Application Laid-Open No. 2002-277279: Patent Document 2). That system calculates distances between the mobile communication terminals owned by users to build a database.

### DISCLOSURE OF THE INVENTION

### Problems to be Solved by the Invention

However, the above-described conventional examples had following problems.

Although it is easy to provide a service in which points are added according to the length of stay or the amount of payment in the tourism industry such as a hotel, a lodge, and a leisure facility, it has been difficult to provide a service according to a travel distance of a user. For tourist agents, it has been difficult to obtain new users due to lack of a particular service directed to users from a distance because the same service is offered to both users from a distance and nearby. On the other hand, users tend to avoid distant hotels and lodges because they feel it burdensome to travel a long distance. The mileage service system in the conventional examples disclosed in Patent Document 1 had a problem that the system was applied only to measurement of a traveling entity, or only to the transport industry or the carrier industry, and it was not possible for a service provider of the tourist industry and the service industry, a location of the facility of which is fixed, to provide the user with the service in which points are added upon reserving, settling, and registering by using the mobile communication terminal in order to differentiate the service to users from a distance.

And the conventional example disclosed in Patent Document 2 had a problem that although distance information of the mobile communication device was calculated by a GPS function, it was not possible for the service provider of the tourist industry and the service industry, the location of the facility of which is fixed, to provide the user with the service in which points are added upon reserving, settling, and registering by the mobile communication terminal in order to differentiate the service to the user from a distance.

Therefore, an object of the present invention is to provide the mileage service system using the location information of the mobile communication terminal and the method thereof, capable of providing the user with the mileage service based on the travel distance, by measuring a distance between the user who owns the mobile communication terminal and the information provider, the location information of which is registered in advance, by detecting the location of the mobile communication terminal, and by calculating the distance as the points and accumulating the same, in order for the information provider of the service industry or the like to differentiate the service to the user from a distance upon reserving, settling, and registering.

### Means for Solving the Problem

The invention according to claim 1 is a mileage service system comprising a server and a mobile communication terminal used by a user, connected to each other via a network, wherein the server comprises a storing unit for storing location information of a fixed property, an obtaining unit for obtaining location information of the mobile communication terminal, a distance calculating unit for calculating a distance between the fixed property and the mobile communication terminal based on the location information of the fixed property and the location information of the mobile communication terminal, and a converting unit for converting the distance calculated by the distance calculating unit to mileage points; and the mobile communication terminal comprises a detecting unit for detecting the location information of the mobile communication terminal, and a notifying unit for notifying the location information detected by the detecting unit to the server.

The invention according to claim 2 is the mileage service system according to claim 1, wherein the server comprises an accepting unit for accepting a reservation of a user for the fixed property, a settling unit for executing settlement of the reservation, and an issuing unit for issuing the mileage points converted by the converting unit after the settlement is completed by the settling unit; and the mobile communication terminal comprises a reservation information sending unit for sending reservation information of the user of the fixed property to the server.

The invention according to claim 3 is the mileage service system according to claim 1, wherein the server comprises an authentication information receiving unit for receiving authentication information, wherein the issuing unit issues the mileage points upon receipt of the authentication information; and the mobile communication terminal comprises an authenticating unit for verifying that the user arrives at a location of the fixed property of a destination, and an authentication information sending unit for sending the authentication information by the authenticating unit to the server.

The invention according to claim 4 is the mileage service system according to any one of claims 1 to 3, wherein the server comprises a fixed property information sending unit for sending location information and related information of the fixed property to the mobile communication terminal, in response to a request from the mobile communication terminal; and the mobile communication terminal comprises a destination information sending unit for sending location information of a desired destination to the server, and a displaying unit for displaying location information and related information of the fixed property sent from the fixed property information sending unit.

The invention according to claim 5 is the mileage service system according to any one of claims 1 to 4, wherein the server comprises a searching unit for searching a redeemable award, based on mileage points issued by the issuing unit, in response to the request from the mobile communication terminal, a redeemable award information sending unit for sending redeemable award information searched by the searching unit to the mobile communication terminal, and a clearing unit for clearing the mileage points, based on redemption award information sent from the mobile communication terminal; and the mobile communication terminal comprises a decided award information sending unit for sending desired award information determined based on the redeemable award information sent by an award information sending unit to the server.

The invention according to claim 6 is the mileage service system according to any one of claims 1 to 5, wherein the location information of the mobile communication terminal is based on location information of a mobile communication base station communicating with the mobile communication terminal.

The invention according to claim 7 is the mileage service system according to claim 6, wherein the mobile communication base station communicating with the mobile communication terminal is specified by a mobile communication network controlling the mobile communication base station.

The invention according to claim 8 is the mileage service system according to any one of claims 1 to 7, wherein the location information is latitude and longitude information.

The invention according to claim 9 is the mileage service system according to any one of claims 1 to 8, wherein the server comprises a managing unit for storing and managing the mileage points for each user.

The invention according to claim 10 is a mileage service method, utilizing a server and a mobile communication terminal used by a user, connected to each other via a network, wherein the mobile communication terminal comprises detecting location information of the mobile communication terminal by a detecting unit, and notifying the location information detected by the detecting unit to the server by a notifying unit; and the server comprises obtaining location information of the mobile communication terminal by an obtaining unit, calculating a distance between the fixed property and the mobile communication terminal based on the location information of the fixed property and the location information of the mobile communication terminal, each stored in storing unit, by a distance calculating unit, and converting the distance calculated by the distance calculating unit to mileage points by a converting unit.

The invention according to claim 11 is the mileage service method according to claim 10, wherein the mobile communication terminal comprises sending reservation information of the user of the fixed property to the server by a reservation information sending unit; and the server comprises receiving a reservation of the user of the fixed property by an receiving unit, executing settlement of the reservation by a settling unit, and issuing the mileage points converted by the converting unit, by an issuing unit after the settlement is completed by the settlement unit.

The invention according to claim 12 is the mileage service method according to claim 10, wherein the mobile communication terminal comprises authenticating that the user arrives at a location of the fixed property of a destination by an authentication unit, and sending the authentication information to the server by an authentication information sending unit; and the server comprises receiving the authentication information by an authentication information receiving unit, and issuing the mileage points in the issuing step after receiving the authentication information.

The invention according to claim 13 is the mileage service method according to any one of claims 10 to 12, wherein the mobile communication terminal comprises sending location information of a desired destination to the server by a destination information sending unit, and displaying the location information and the related information of the fixed property sent from fixed property information sending unit, by a display unit; and the server comprises sending the location information and the related information of the fixed property to the mobile communication terminal, in response to a request from the mobile communication terminal, by the fixed property information sending unit.

The invention according to claim 14 is the mileage service method according to any one of claims 10 to 13, wherein the mobile communication terminal comprises sending desired award information decided based on redeemable award information sent by an award information sending unit to the server, by a decided award information sending unit; and the server comprises searching the redeemable award, based on the mileage points issued by the issuing unit, in response to the request from the mobile communication terminal, by a searching unit, sending the redeemable award information searched by the searching unit to the mobile communication terminal, by a redeemable award information sending unit, and clearing the mileage points based on the desired award information sent by the decided award information sending unit of the mobile communication terminal, by a clearing unit.

### Effect of the Invention

As a first effect, an information provider who wants to provide a mileage service upon reserving, settling, and registering can provide a user with a service to add mileage points according to a distance from the user, by searching a location of the user and that of a tourist industry by using a mobile communication network, to differentiate a service to the user from a distance. And, remote areas avoided due to problems such as travel cost or the like becomes an attractive area with an added value, mileage points, so that it becomes possible to acquire new users to energize the remote areas.
As a second effect, it becomes possible for the tourist agent to gather users, avoiding a case in which points are added to all users who apply for the mileage service regardless whether a user visits the location the information provider introduced. A reservation/ settlement system and the mileage processing are linked so that authentication is conducted when mileage points are issued, and the mileage points are added only after settlement of the payment or after the authentication by the information provider at the actual place.

### BEST MODE FOR CARRYING OUT THE INVENTION

A mileage service system using location information of a mobile communication terminal, capable of providing a user with a mileage service according to a travel distance, in order for the information provider of a service industry and the like to differentiate a service to the user from a distance, when reserving, settling, and registering by using the mobile communication terminal, is realized by providing a server with a storing unit storing location information of a fixed property, obtaining unit obtaining location information of the mobile communication terminal, a distance calculating unit calculating a distance between the fixed property and the mobile communication terminal based on the location information of the fixed property and the location information of the mobile communication terminal, and a converting unit converting the distance calculated by the distance calculating unit to mileage points, and by providing the mobile communication terminal with a detecting unit detecting the location information of the mobile communication terminal and a notifying unit notifying the location information detected by the detecting unit to the server.

### Example 1

A configuration and an operation of a first example of the present invention will be described with reference to the drawings.

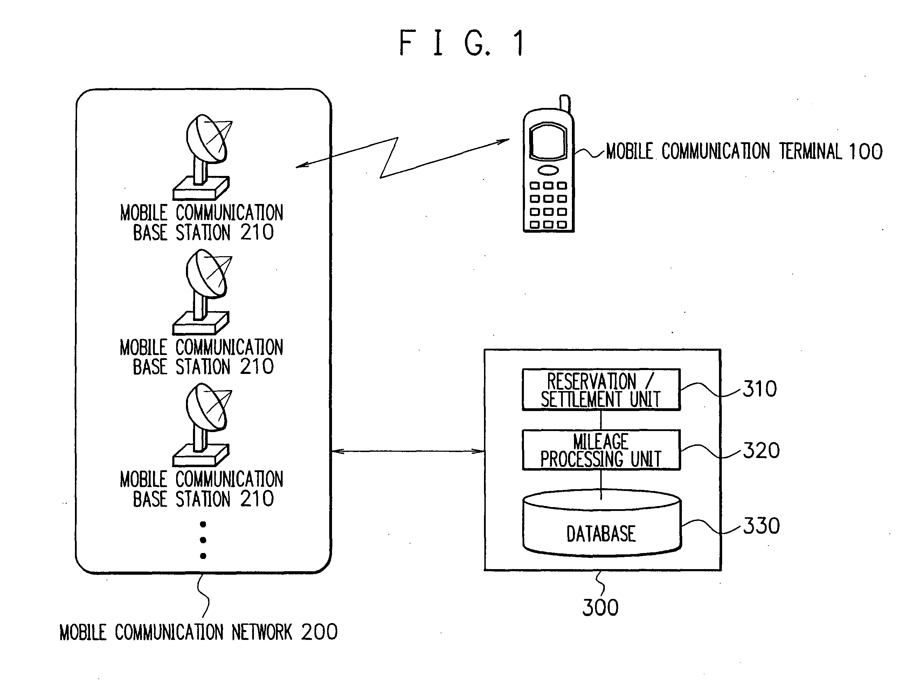

Fig. 1 is a view showing a structure of a mileage service system in this embodiment. Referring to Fig. 1, the system is comprised of a mobile communication terminal 100 owned by a user, a mobile communication network 200 including mobile communication base stations 210, and the like, and a server 300 owned by a mileage service provider. The mobile communication terminal 100, the mobile communication network 200, and the server 300 are under program's control, and are connected to one another via a network.

The mobile communication terminal 100 is a terminal with a function to execute information processing and to perform data communication, such as a mobile phone, a PHS (Personal Handyphone System), a notebook computer, and a handheld information terminal, for example. The mobile communication terminal 100 may be provided with a function to access the server 300 on the mileage service provider side via the network, and to display mileage information or the like.

Herein, the mileage information is, for example, information provider information, the amount of mileage, kinds of redeemable awards, or the like. Furthermore, the mobile communication terminal 100 may be provided with a function, directed by an operation by the user, to access the server 300 via a network, and to send a request about search of an information provider, application/issuance of mileage, confirmation of the amount of mileage, and exchange of an award.

The mobile communication network 200 is provided with a function to perform communication with a mobile communication terminal 100 owned by the user, via the mobile communication base station 210 placed at an area where the user exists, to connect the server 300 and the mobile communication terminal 100 to each other. And, the mobile communication network 200 is provided with a function to search a mobile communication base station that is communicating with the mobile communication terminal 100 from the mobile communication base stations 210 or the like included in the network to detect a location of the user, and a function to send identification information, which specifies the mobile communication base station, as a search result, to an upper server 300.

The server 300 has a reservation/ settlement unit 310 provided with a function to execute reservation processing and settlement processing, and a mileage processing unit 320 provided with a function to execute processing for a mileage service in response to an access from the mobile communication terminal 100, and to send information.

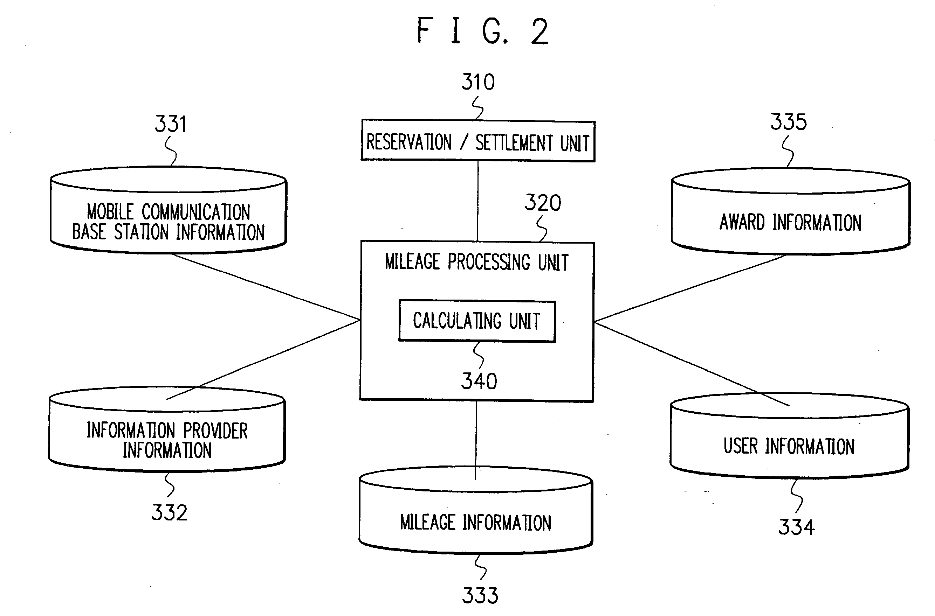

Furthermore, the server 300 is provided with a database 330 in which information sent from the mobile communication terminal 100 and the mobile communication network 200 and a variety of information registered by the information provider in advance are recorded. As shown in Fig. 2 in detail, the server 300 has, as a database in which the variety of information is recorded, a mobile communication base station information database 331 storing latitude and longitude information of each mobile communication base station, an information provider information database 332 storing latitude and longitude information of a hotel, a lodge, and a leisure facility or the like of a tourist agent or the like exists, who is the information provider, a mileage information database 333 storing a mileage application/ issuance result of the user, a user information database 334 storing the name, phone number, address of a user and mileage points owned by the user, and an award information database 335 storing the name of the redeemable award according to points.

The server 300 has a calculating unit 340 provided with a function to measure a distance between a user and a facility of a information provider upon application for mileage. The calculating unit 340 may extract latitude and longitude information corresponding to a base station ID number, which indicates a mobile communication base station that the mobile communication terminal communicates with, and latitude and longitude information corresponding to an information provider ID number, which indicates a facility of a information provider from which the user wants to receive the service, so that a distance therebetween is calculated.

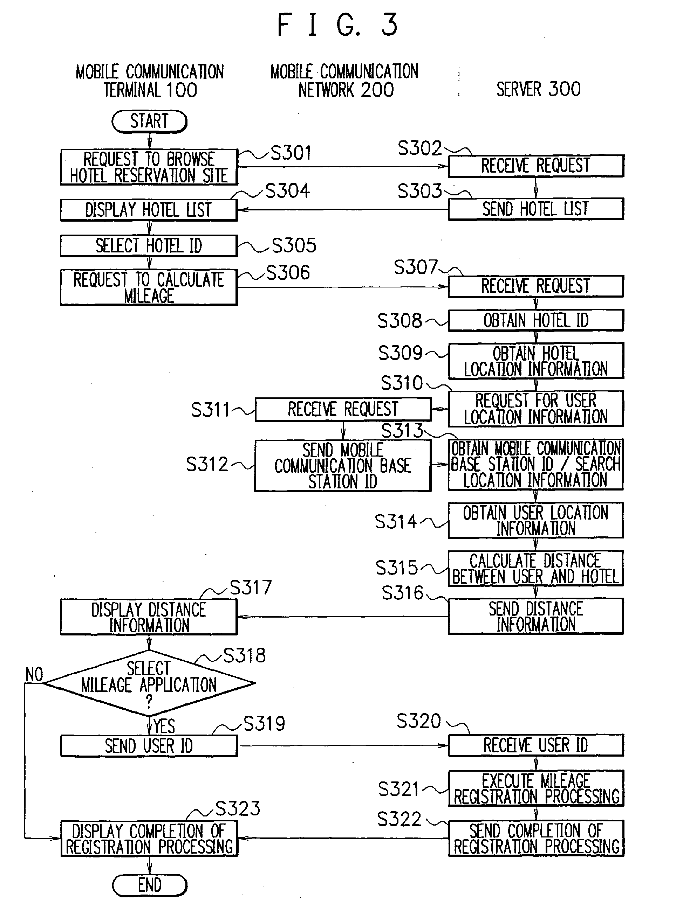

An operation of the mileage service system in this embodiment thus structured will be described with reference to Fig. 3.

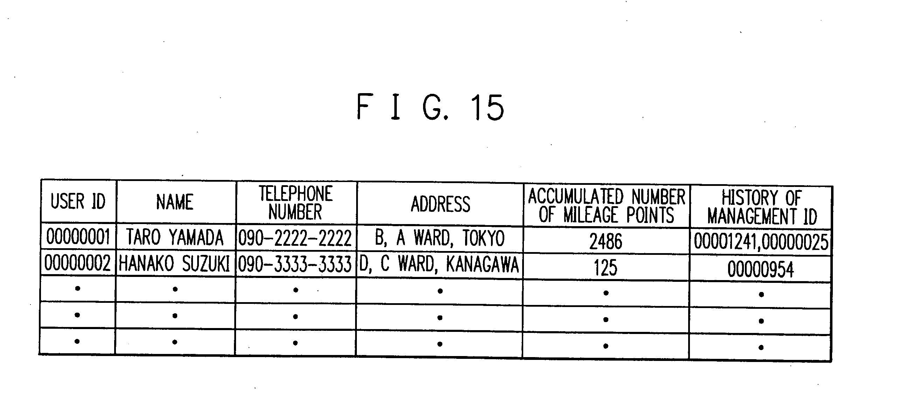

Fig. 3 is a flowchart illustrating a procedure of adding mileage points according to the distance between a user and a hotel. First, as a precondition, the user, who wants to use the mileage service, accesses in advance the server 300 by using the mobile communication terminal 100, and registers the name, phone number, address, and the like as the information of the user. As shown in Fig. 15, for example, at the time of registration, the server 300 records the user information received from the mobile communication terminal 100 of the user to the user information database 334 (S301).

When the user reserves the hotel on the Web through the Internet or the like, the user, who wants to use the mileage service, accesses the server 300 of the mileage service provider by using the mobile communication terminal 100, and requests a browse of a hotel reservation site of a desired area (S302).

The server 300, which received the request of browsing the hotel reservation site from the mobile communication terminal 100, refers to the information provider database 332 to extract the hotel information of the area desired by the user, lists the extracted hotel information, and sends the same to the mobile communication terminal 100 (S303).

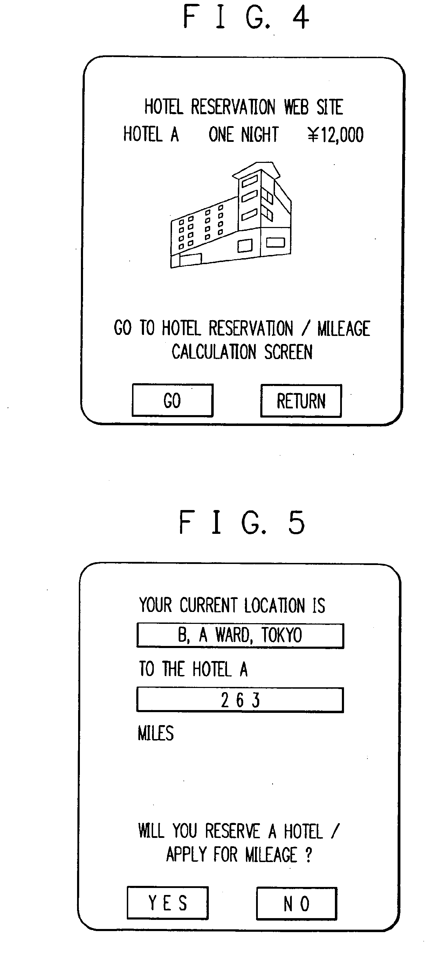

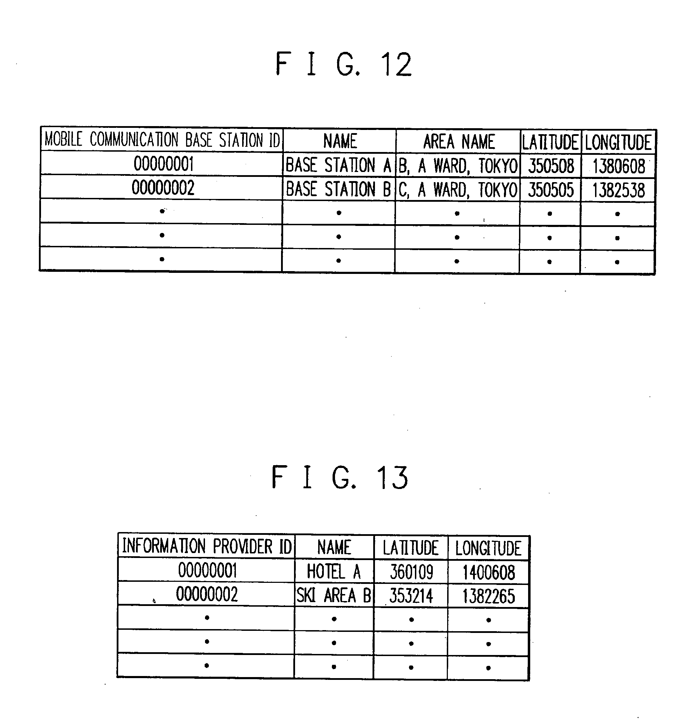

The mobile communication terminal 100, which received the list of the hotel information, displays the list of the hotel information (S304). For example, the list may be in tabular form, as shown in Fig. 13. And when the user specifies a hotel by selecting the information provider ID number of a hotel A, detailed information of the hotel A and a selection screen for mileage point calculation are displayed (S305). For example, an exterior appearance and an accommodation rate or the like of the hotel, as shown in Fig. 4, may be displayed on the screen of the mobile communication terminal 100.

When the user selects to request the mileage point calculation, the mobile communication terminal 100 sends the request and the information provider ID number of the selected hotel A to the server 300 (S306).

The server 300 may search for a predetermined table registered in the information provider information database 332, as shown in Fig. 13 for example, based on the received information provider ID number, to obtain the name of the facility corresponding to the information provider ID number, which matches the received information provider ID number, and obtain latitude and longitude information of a location of the hotel A, as information about the hotel A having the obtained name of the facility (S308, 309).

And, at the same time, the server 300 requests the mobile communication network 200 to confirm current location information of the user (S310).

The mobile communication network 200 manages base station ID numbers, each of which is unique to a mobile communication base station 210 or the like included in the mobile communication network 200. When confirmation of the current location information of the user is requested, the mobile communication network 200 identifies the base station ID number of the mobile communication base station, with which the mobile communication terminal 100 of the user communicates, and notifies the same to the server 300. The mobile communication terminal 100 of the user communicates with the nearest mobile communication base station among the mobile communication base stations included in the mobile communication network 200.

The server 300 may search the predetermined table registered in the mobile communication base station information database 331, as shown in Fig. 12 for example, based on the received base station ID number, to obtain the device name corresponding to the base station ID number, which matches the received base station ID number, and may obtain, as information about the device name, the latitude and longitude information of the location of the mobile communication base station, with which the user communicates (S313, 314). And, the latitude and longitude information of the location of the mobile communication base station, with which the user communicates, is deemed to be location information of the user or the mobile communication terminal 100 of the user.

The calculating unit 340 of the server 300 calculates the distance between the hotel A and the user from a difference of latitudes and a difference of longitudes, based on the latitude and longitude information of the hotel A and that of the user (S315). When it is required to get around a mountain, a river, a bridge, or other obstacles with reference to map information, a predetermined distance may be added. When transportation means such as a railroad, which has a given route, is used, a travel distance of the transportation means may be added.

The server 300 sends the current location information of the user and the distance information to the hotel A to the mobile communication terminal 100, and confirms whether to execute registration processing or not (S316).

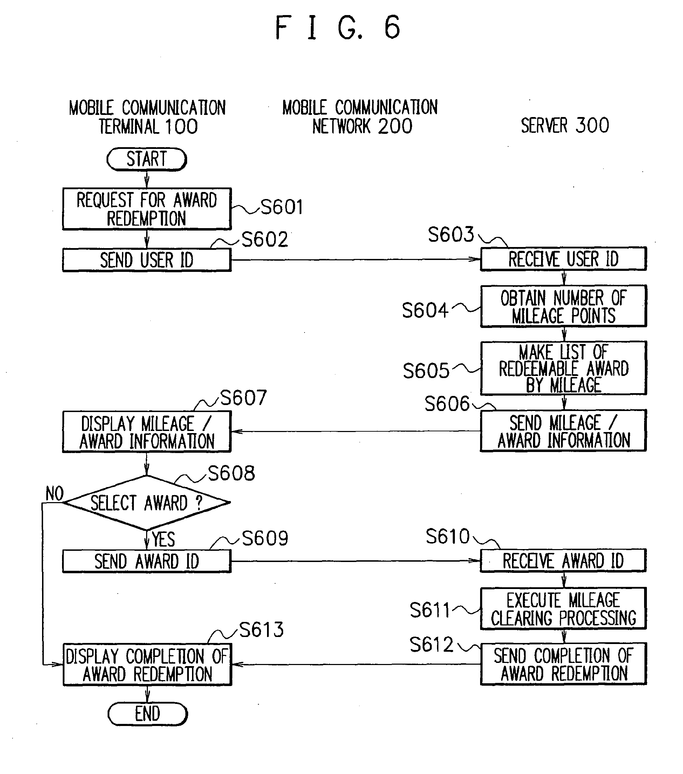

The mobile communication terminal 100 displays the received current location information of the user and the distance information to the hotel A (S317). For example, a screen as shown in Fig. 5 may be displayed on the display of the mobile communication terminal 100. And it is judged whether to make an accommodation reservation and apply for mileage (S318), and when the user makes the accommodation reservation and applies mileage, the user ID number is sent to the server 300 so as to execute the registration processing (S319). On the other hand, when the user does not make the accommodation reservation or apply for mileage, an end screen of registration is displayed, and the process is ended (S323).

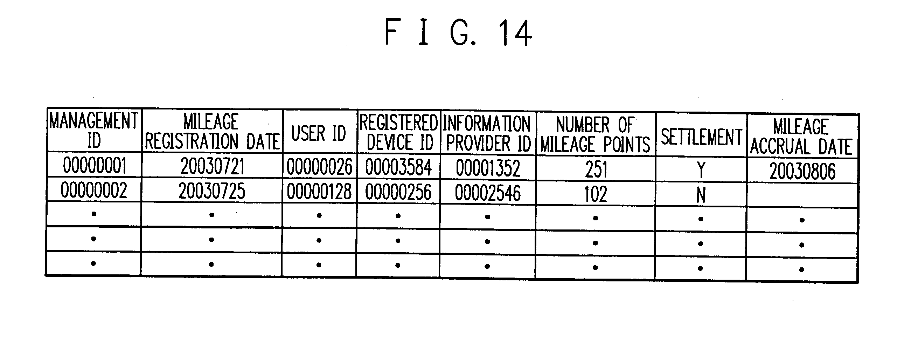

The server 300, which receives the mileage application by the user ID number, adds new mileage ID information to the predetermined table registered in the mileage information database 333 as shown in Fig. 14, for example, and records the mileage registration date, user ID number, information provider ID number, transport distance, and the like, by combining them with the new mileage ID information (S321).

Finally, the server 300 sends information that the registration of the mileage information is ended to the mobile communication terminal 100, and the mobile communication terminal 100 displays the received information, and ends the process (S322, S323).

Issuance of the mileage points to the user by the server 300 is performed at the reservation/ settlement unit 310 of the server 300, after the payment from the user is confirmed and settlement processing is completed. The completion of the settlement processing is notified to the mileage processing unit 320.

The server 300 extracts management ID number information regarding the settlement processing from the predetermined table, which is registered in the mileage information database 333, as shown in Fig. 14, for example. And the server 300 records settlement status information combined with this information by setting a flag that shows a status indicating the completion of the settlement, and then issues the mileage points based on the registered travel distance. Incidentally, the issuance of the mileage points may be formulated in such a way that a multiplier of points varies depending on information providers. For example, points may be doubled. And, the history and the mileage points of the management ID number are added to a predetermined table for a user, the predetermined table being registered in the user information database 334, as shown in Fig. 15, for example.

Next, a process in which the user accesses the server 300 by using the mobile communication terminal 100 to confirm the mileage points and to exchange points for awards according to the mileage points after the addition of the mileage points is described with reference to Fig. 6.

The mobile communication terminal 100 requesting the exchange for awards sends the user ID number for uniquely identifying the user to the server 300 (S601, S602).

The mileage processing unit 320 of the server 300, which received the award exchange request and the user ID number information from the mobile communication terminal 100 refers to the user information database 334 to obtain the mileage points information combined with the user ID number (S603, S604).

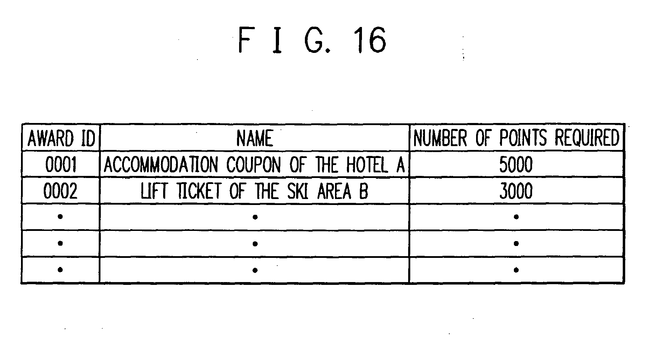

The mileage processing unit 320 of the server 300, which obtained the mileage points information, extracts a list of redeemable awards for the mileage points from the award information database 335, and creates a list including corresponding award ID number information, as shown in Fig. 16 for example (S605).

The server 300 sends the created award list information to the mobile communication terminal 100 of the user (S606).

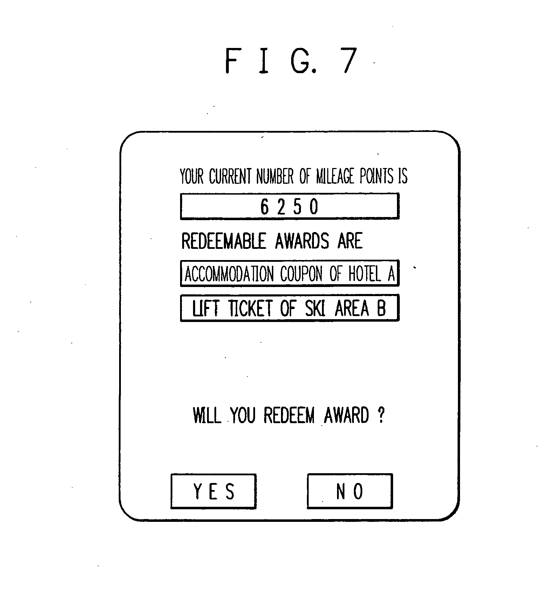

The mobile communication terminal 100 displays the received award list information (S607). For example, a screen as shown in Fig. 7 may be displayed on the display of the mobile communication terminal 100. And, it is determined whether to select an award (S608), and if the user selects the award, the award ID number of the award, which the user wants to obtain, is sent to the server 300 (S609). On the other hand, if the user does not select an award for the reason that there is no award that the user wishes to obtain, an end screen is displayed, and the process is ended (S613).

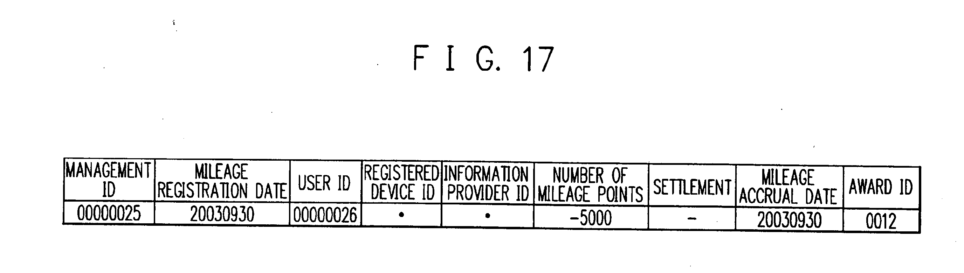

The server 300, which received the award request in the form of the award ID number information (S610) notifies the mileage processing unit 320 of the award ID number information, and the mileage processing unit 320 issues a new management ID number to the predetermined table registered in the mileage information database 333, as shown in Fig. 17 for example, and records the mileage points to be cleared, the award ID number, the user ID number, the mileage registration date, the mileage issue date and the like, by combining them with the management ID number information. And, the mileage processing unit 320 records the user information obtained by reducing consumed points to the predetermined table registered in the user information database 334, as shown in Fig. 17 for example, to update the information (S611).

Finally, the mileage processing unit 320, that ended the mileage clearing processing notifies the mobile communication terminal 100 of information that the award redemption processing is ended, and the mobile communication terminal 100 displays the received information, and the process is ended (S612, S613).

The server 300 that ended the mileage clearing processing may notify the mileage service provider, which manages the service, of information that the mileage clearing processing is ended, and the mileage service provider, receiving the award redemption notice, may send the selected award to the address registered in the server 300 as the user information.

According to the above-described example, since it is configured that the mobile communication terminal calculates the distance between a user and a hotel, it becomes possible to differentiate a service in the Web reservation/ settlement system, the service being based on the distance between a user and a facility of an information provider.

Further, since the mileage service is applied in advance upon a reservation on the Web and mileage points are issued upon settlement on the Web, authentication equivalent to that in the Web settlement can be also assured for the mileage service.

Furthermore, since it is configured to provide the latitude and longitude information as the location information of a facility of an information provider, it becomes possible to provide a user with a map indicating the location of a hotel, and navigational information, which is generated by the calculating unit 340.

### Second Example

An operation of a second example of the present invention is described hereinbelow. This example realizes a mileage service function, which is similar to that in the first embodiment, when a mileage service system has a function of Web advertisement in place of a function of a Web reservation.

A substantive structure of the mileage service system is similar to that of the first embodiment.

Hereinafter, a flow of a process to add the mileage points based on the distance between a user and a facility of an advertiser in this embodiment will be described.

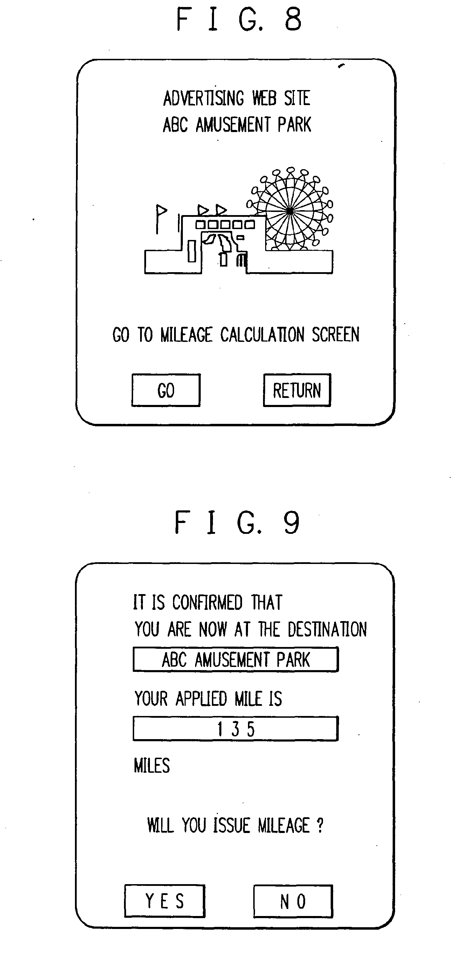

Different from the first embodiment, reservation processing does not exist and for example a mileage service is applied from a Web site as shown in Fig. 8. The mobile communication terminal 100 may have a function to access the Web site managed by an advertiser, which is an information provider, via the Internet.

And, a method for issuing mileage and a method for authentication are different from the first embodiment due to a lack of a method for authenticating a user.

A method for issuing mileage does not require the authentication. Different from the first embodiment, at the step S321 in Fig. 3, the registration processing of settlement and reservation is omitted: adding new mileage ID information to the predetermined table and recording the mileage registration date, a user ID number, an information provider ID number and the travel distance or the like in association with the new mileage ID information are omitted. And the mileage points are issued at the processing stage of the step S321.

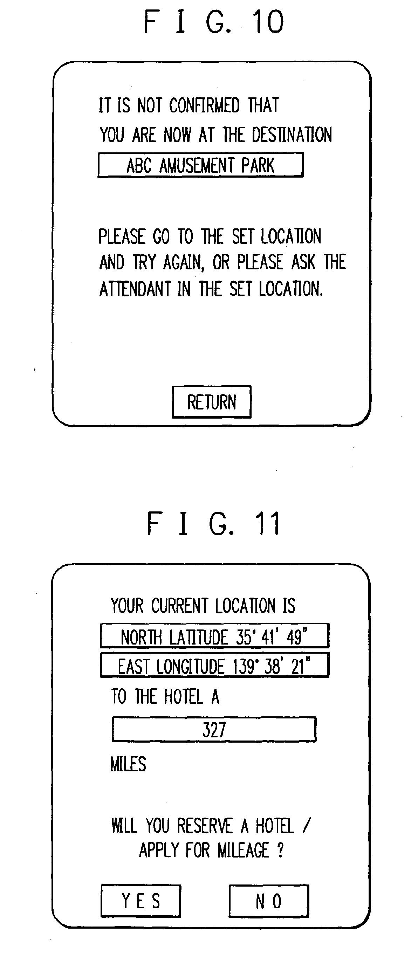

Another method for issuing mileage requires authentication. Although an application procedure of the mileage service is similar to that of the first embodiment, an authentication method at issue of the mileage points is different. That is, since the Web reservation system does not exist unlike the first embodiment, location search is again performed at the actual place of a facility of an advertiser, which is the information provider, as an alternative authentication method, and it is confirmed that the user has actually arrived at the location. For example, an authentication result screen as shown in Fig. 9 may be displayed, where the user arrives at the destination and performs the location search by accessing the Web site from the mobile communication terminal 100. On the other hand, Fig. 10 is a view showing a display example of the authentication result screen in which the user does not arrive at the destination or fails to be authenticated by some reason.

The authentication method may be the input of a password obtained at the actual place, the capture of a code such as a bar code by using a camera function of the mobile communication terminal 100, and the use of a device such as a Bluetooth, infrared communication, and a noncontact IC car as long as the arrival of the user at the actual location is verified. After the authentication, the mileage points are issued.

According to the above-described example, by applying for the mileage service in the Web advertisement, the user is interested in a distant facility or the like with an added value, so that it becomes possible to take advantage of advertising effectiveness.

And, by utilizing the authentication function, it becomes possible to provide mileage points applied in advance only to the user actually arriving at the location. As a result, guest attracting effectiveness by the publicity is enhanced.

The above-described embodiment is the preferred embodiment of the present invention, and may be modified within the scope of the spirit of the present invention. For example, this may be the system in which the distance between the user and the facility of the information provider is calculated, the date and time to register the calculation result in the server 300 is recorded, and bonus points according to the arrival time to the destination are added by comparing the registration date and time and the arrival time to the destination.

And, it is possible to obtain the location information and the distance information by mounting the location search function such as the GPS (Global Positioning Systems) to the mobile communication terminal 100, to display the screen as shown in Fig. 9 for example.

### Industrial applicability

The present invention may also be applied to a discount point system of restaurants and stores in a suburban area.

### BRIEF DESCRIPTION OF THE DRAWINGS

Fig. 1 is a diagram showing a structure of a system according to a first embodiment of the present invention.
Fig. 2 is a diagram showing a structure of a server.
Fig. 3 is a flowchart showing an operation of mileage point processing according to the first embodiment of the present invention.
Fig. 4 is a view showing an example of a reservation screen according to the first embodiment of the present invention.
Fig. 5 is a view showing an example of a mileage service application screen according to the first embodiment of the present invention.
Fig. 6 is a flowchart showing an operation of award exchange processing according to the first embodiment of the present invention.
Fig. 7 is a view showing an example of award exchange processing screen according to the first embodiment of the present invention.
Fig. 8 is a view showing an example of an advertising screen according to a second embodiment of the present invention.
Fig. 9 is a view showing an example of a current location authentication screen according to the second embodiment of the present invention.
Fig. 10 is a view showing an example of a current location authentication failure screen according to the second embodiment of the present invention.
Fig. 11 is a view showing an example of a current location authentication screen using the GPS.
Fig. 12 is a view showing a data structure of mobile communication base station information.
Fig. 13 is a view showing a data structure of facility information of an information provider.
Fig. 14 is a view showing a data structure of mileage information.
Fig. 15 is a view showing a data structure of user information.
Fig. 16 is a view showing a data structure of award information.
Fig. 17 is a view showing a data structure of settlement information.

### DESCRIPTION OF THE REFERENCE NUMERALS

- 100: mobile communication terminal
- 200: mobile communication network
- 210, 220, 230: mobile communication base station
- 300: server
- 310: reservation/ settlement unit
- 320: mileage processing unit
- 330: database

## Claims

1. A mileage service system, comprising a server and a mobile communication terminal used by a user, the server and the mobile communication terminal connected to each other via a network,
said server comprising:
a storing unit for storing location information of a fixed property;
an obtaining unit for obtaining location information of said mobile communication terminal;
a distance calculating unit for calculating a distance between said fixed property and said mobile communication terminal, based on the location information of said fixed property and said mobile communication terminal; and
a converting unit for converting the distance calculated by said distance calculating unit to mileage points and
said mobile communication terminal comprising:
a detecting unit for detecting the location information of the mobile communication terminal; and
a notifying unit for notifying said server of the location information detected by said detecting unit.

2. The mileage service system according to claim 1,
said server further comprising:
an receiving unit for receiving a reservation of a user for said fixed property;
a settling unit for executing settlement of said reservation; and
an issuing unit for issuing said mileage points converted by said converting unit after the settlement is completed by said settling unit, and
said mobile communication terminal further comprising a reservation information sending unit for sending reservation information of the user for said fixed property to said server.

3. The mileage service system according to claim 1,
said server further comprising an authentication information receiving unit for receiving authentication information,
wherein said issuing unit issues said mileage points after receiving said authentication information, and
said mobile communication terminal further comprising an authenticating unit for verifying that the user arrives at a location of said fixed property of a destination and
an authentication information sending unit for sending said authentication information by said authenticating unit to said server.

4. The mileage service system according to any one of claims 1 to 3,
said server further comprising a fixed property information sending unit for sending location information and related information of said fixed property to the mobile communication terminal, in response to a request from said mobile communication terminal, and
said mobile communication terminal further comprising a destination information sending unit for sending location information of a desired destination to said server and
a displaying unit for displaying location information and related information of said fixed property sent from said fixed property information sending unit.

5. The mileage service system according to any one of claims 1 to 4,
said server further comprising:
a searching unit for searching a redeemable award, based on mileage points issued by said issuing unit, in response to the request from said mobile communication terminal;
a redeemable award information sending unit for sending redeemable award information searched by said searching unit to said mobile communication terminal; and
a clearing unit for clearing said mileage points, based on redemption award information sent from said mobile communication terminal, and
said mobile communication terminal further comprising a decided award information sending unit for sending desired award information determined based on said redeemable award information sent by an award information sending unit to said server.

6. The mileage service system according to any one of claims 1 to 5,
wherein said location information of said mobile communication terminal is based on location information of a mobile communication base station communicating with the mobile communication terminal.

7. The mileage service system according to claim 6,
wherein said mobile communication base station communicating with said mobile communication terminal is specified by a mobile communication network controlling said mobile communication base station.

8. The mileage service system according to any one of claims 1 to 7,
wherein said location information is latitude and longitude information.

9. The mileage service system according to any one of claims 1 to 8,
wherein said server comprises a managing unit for storing and managing said mileage points for each user.

10. A mileage service method, utilizing a server and a mobile communication terminal used by a user, connected to each other via a network,
said mobile communication terminal comprising:
detecting location information of the mobile communication terminal by a detecting unit; and
notifying the location information detected by said detecting unit to said server by a notifying unit, and
said server comprising:
obtaining location information of said mobile communication terminal by an obtaining unit;
calculating a distance between said fixed property and said mobile communication terminal based on the location information of said fixed property and the location information of said mobile communication terminal, each stored in storing unit, by a distance calculating unit; and
converting the distance calculated by said distance calculating unit to mileage points by a converting unit.

11. The mileage service method according to claim 10,
said mobile communication terminal comprising sending reservation information of the user of said fixed property to said server by a reservation information sending unit, and
said server comprising:
receiving a reservation of the user of said fixed property by an receiving unit;
executing settlement of said reservation by a settling unit; and
issuing by an issuing unit said mileage points converted by said converting unit after the settlement is completed by said settlement unit.

12. The mileage service method according to claim 10,
said mobile communication terminal comprising:
verifying that the user arrives at a location of said fixed property of the destination by an authentication unit; and
sending said authentication information to said server by an authentication information sending unit, and
said server comprising:
receiving the authentication information by an authentication information receiving unit; and
issuing said mileage points after receiving said authentication information at said issuing step.

13. The mileage service method according to any one of claims 10 to 12,
said mobile communication terminal comprising:
sending location information of a desired destination to said server by a destination information sending unit; and
displaying the location information and the related information of the fixed property sent from fixed property information sending unit, by a display unit; and
said server comprising:
sending the location information and the related information of said fixed property to the mobile communication terminal, in response to a request from said mobile communication terminal, by the fixed property information sending unit.

14. The mileage service method according to any one of claims 10 to 13,
said mobile communication terminal comprising sending desired award information determined based on redeemable award information sent by an award information sending unit to said server by a decided award information sending unit and
said server comprising:
searching the redeemable award, based on the mileage points issued by said issuing unit, in response to the request from said mobile communication terminal, by a searching unit;
sending the redeemable award information searched by said searching unit to said mobile communication terminal, by a redeemable award information sending unit; and
clearing said mileage points based on said desired award information sent by the decided award information sending unit of said mobile communication terminal, by a clearing unit.

## Amended claims

Statement under Art. 19.1 PCT
1. A mileage service system, comprising a server and a mobile communication terminal used by a user, the server and the mobile communication terminal connected to each other via a network,
 said server comprising:
a storing unit for storing location information of a fixed property;
an obtaining unit for obtaining location information of said mobile communication terminal;
a distance calculating unit for calculating a distance between said fixed property and said mobile communication terminal, based on the location information of said fixed property and the location information of said mobile communication terminal; and
a converting unit for converting the distance calculated by said distance calculating unit to mileage points and
said mobile communication terminal comprising:
a detecting unit for detecting the location information of the mobile communication terminal; and
a notifying unit for notifying the location information detected by said detecting unit to said server

2. The mileage service system according to claim 1,
 said server further comprising:
an receiving unit for receiving a reservation of a user for said fixed property;
a settling unit for executing settlement of said reservation; and
an issuing unit for issuing said mileage points converted by said converting unit after the settlement is completed by said settling unit, and
said mobile communication terminal further comprising a reservation information sending unit for sending reservation information of the user of said fixed property to said server.

3. The mileage service system according to claim 1,
 said server comprising an authentication information receiving unit for receiving authentication information,
 wherein said issuing unit issues said mileage points after receiving said authentication information, and
 said mobile communication terminal further comprising an authenticating unit for authenticating that the user arrives at a location of said fixed property of a destination and
 an authentication information sending unit for sending said authentication information by said authenticating unit to said server.

4. The mileage service system according to any one of claims 1 to 3,
 said server comprising a fixed property information sending unit for sending location information and related information of said fixed property to the mobile communication terminal, in response to a request from said mobile communication terminal, and
 said mobile communication terminal comprising a destination information sending unit for sending location information of a desired destination to said server and
 a displaying unit for displaying location information and related information of said fixed property sent from said fixed property information sending unit.

5. The mileage service system according to any one of claims 1 to 4,
 said server comprising:
a searching unit for searching a redeemable award, based on mileage points issued by said issuing unit, in response to the request from said mobile communication terminal;
a redeemable award information sending unit for sending redeemable award information searched by said searching unit to said mobile communication terminal; and
a clearing unit for clearing said mileage points, based on redemption award information sent from said mobile communication terminal, and
said mobile communication terminal comprising a decided award information sending unit for sending desired award information determined based on said redeemable award information sent by an award information sending unit to said server.

6. The mileage service system according to any one of claims 1 to 5,
 wherein said location information of said mobile communication terminal is based on location information of a mobile communication base station communicating with the mobile communication terminal.

7. The mileage service system according to claim 6,
 wherein said mobile communication base station communicating with said mobile communication terminal is specified by a mobile communication network controlling said mobile communication base station.

8. The mileage service system according to any one of claims 1 to 7,
 wherein said location information is latitude and longitude information and the information which said mobile communication base station possesses.

9. The mileage service system according to any one of claims 1 to 8,
 wherein said server comprises a managing unit for storing and managing said mileage points for each user.

10. A mileage service method, utilizing a server and a mobile communication terminal used by a user, connected to each other via a network,
 said mobile communication terminal comprising:
detecting location information of the mobile communication terminal by a detecting unit; and
notifying the location information detected by said detecting unit to said server by a notifying unit, and
said server comprising:
obtaining location information of said mobile communication terminal by an obtaining unit;
calculating a distance between said fixed property and said mobile communication terminal based on the location information of said fixed property and the location information of said mobile communication terminal, each stored in storing unit, by a distance calculating unit; and
converting the distance calculated by said distance calculating unit to mileage points by a converting unit.

11. The mileage service method according to claim 10,
 said mobile communication terminal comprising sending reservation information of the user of said fixed property to said server by a reservation information sending unit, and
 said server comprising:
receiving a reservation of the user of said fixed property by an receiving unit;
executing settlement of said reservation by a settling unit; and
issuing said mileage points converted by said converting unit by an issuing unit after the settlement is completed by said settlement unit.

12. The mileage service method according to claim 10,
 said mobile communication terminal comprising:
verifying that the user arrives at a location of said fixed property of a destination by an authentication unit; and
sending said authentication information to said server by an authentication information sending unit, and
said server comprising:
receiving the authentication information by an authentication information receiving unit; and
issuing said mileage points in said issuing step after receiving said authentication information.

13. The mileage service method according to any one of claims 10 to 12,
 said mobile communication terminal comprising:
sending location information of a desired destination to said server by a destination information sending unit; and
displaying the location information and the related information of the fixed property sent from fixed property information sending unit, by a display unit; and
said server comprising:
sending the location information and the related information of said fixed property to the mobile communication terminal, in response to a request from said mobile communication terminal, by the fixed property information sending unit.

14. The mileage service method according to any one of claims 10 to 13,
 said mobile communication terminal comprising sending desired award information determined based on redeemable award information sent by an award information sending unit to said server by a determined a ward information sending unit and
 said server comprising:
searching the redeemable award, based on the mileage points issued by said issuing unit, in response to the request from said mobile communication terminal, by a searching unit;
sending the redeemable award information searched by said searching unit to said mobile communication terminal, by a redeemable award information sending unit; and
clearing said mileage points based on said desired award information sent by the decided award information sending unit of said mobile communication terminal, by a clearing unit.
